# FASCICULE DE BREVET EUROPEEN

(11) **EP 0 387 743 B1**
(45) Date de publication et mention de la délivrance du brevet: **01.12.1993**
(21) Numéro de dépôt: 90104616.9
(22) Date de dépôt: 12.03.1990
(51) Int. Cl.: H02K 9/06, H02K 9/16, H02K 15/00

(54) **Moteur électrique fermé à refroidissement par air et son procédé de fabrication**
Geschlossener, luftgekühlter elektrischer Motor und Verfahren zu seiner Herstellung
Enclosed air cooled electrical motor and its manufacturing method

(30) Priorité: 16.03.1989 FR 8903476
(43) Date de publication de la demande: 19.09.1990
(73) Titulaire: GEC ALSTHOM MOTEURS SA, 54062 Nancy Cédex (FR)
(72) Inventeur: Brovelli, Jean Baptiste, F-54690 Lay Saint Christophe (FR); Leboucher, Alain, F-54210 Saint Nicolas De Port (FR); Henaff, Georges, F-54220 Malzeville (FR)
(74) Mandataire: Weinmiller, Jürgen

(56) Documents cités:
- EP-A- 39 493
- AT-B- 284 257
- DE-A- 2 613 984
- DE-C- 670 264
- FR-A- 446 921
- JP-A- 5 541 197
- PATENT ABSTRACTS OF JAPAN vol. 10, no. 113 (E-399)(2170) 26 avril 1986, & JP-A-60 249839 (MITSUBISHI DENKI K.K.) 10 décembre 1985,
- PATENT ABSTRACTS OF JAPAN vol. 3, no. 136 (E-151)(144) 13 novembre 1979, & JP-A-54 115708 (HITACHI) 09 août 1979,

## Description

La présente invention est relative à un moteur de type fermé, en particulier un moteur asynchrone, à refroidissement par air.

Les moteurs à refroidissement par air sont d'un encombrement important, dû à la présence d'un dispositif aéroréfrigérant juxtaposé au capot du moteur. Il a été proposé dans le document AT-B-284 257, de réaliser un moteur électrique comprenant:
- un premier circuit de refroidissement avec ventilateur, dans lequel l'air passe par des canaux statoriques et par l'entrefer, et vient lécher l'extérieur du stator,
- un second circuit de refroidissement, dissocié du premier, comprenant des canaux débouchant à l'extérieur des flasques.

Cette disposition permet de réduire le volume global du moteur aéroréfrigéré, mais le mode de réalisation proposé est compliqué et conduit à un prix de revient élevé.

Un but de la présente invention est de réaliser un moteur du type précité, mais de construction plus simple et par suite, moins coûteuse.

Un autre but de l'invention est de réaliser un moteur de conception modulaire, permettant de réaliser des moteurs, à des prix compétitifs, dans une gamme étendue de puissance.

Il a également été proposé, dans le document JP-A-60 249 839, un moteur comportant des canaux de section oblongue, parallèles à l'arbre du moteur et pratiqués dans le circuit magnétique statorique. A l'intérieur de ces canaux sont disposés des tubes cylindriques; en raison de la forme oblogue de la section des canaux, un espace subsiste entre les tubes et la paroi intérieure des canaux. De l'air atmosphérique est envoyé à l'intérieur des tubes par un premier ventilateur; l'échange thermique entre l'air des canaux et les tubes permet un certain refroidissement du circuit magnétique statorique. En outre, l'air brassé par un second ventilateur placé à l'intérieur du capotage du moteur vient lécher la paroi intérieure du circuit magnétique statorique et subit de la sorte un certain refroidissement.

Un but de l'invention vise à améliorer l'échange thermique entre l'air des canaux statoriques et l'air extérieur au moteur.

Un autre but de l'invention est de réaliser un moteur économique en réalisant les canaux par empilage de tôles préalablement perforées.

L'invention a pour objet un moteur électrique de type fermé comprenant notamment un circuit magnétique statorique et un capotage comprenant une enveloppe et deux flasques d'extrémité, comprenant un premier circuit de ventilation dudit circuit magnétique statorique et un second circuit de ventilation intérieur audit capotage, les deux circuits de ventilation étant dissociés, le premier circuit de ventilation comportant des canaux pratiqués dans le circuit magnétique statorique parallèlement à l'axe du moteur et débouchant à l'extérieur du circuit statorique, caractérisé en ce que ce que lesdits canaux sont prolongés de part et d'autre du circuit magnétiques statorique par des tubes traversés par de l'air extérieur au moteur envoyé par un premier ventilateur, le second circuit de ventilation comprenant un second ventilateur, disposé à l'intérieur du capotage du moteur, et envoyant de l'air entre les tubes et à l'extérieur de ceux-ci.

Selon un mode particulier de réalisation de l'invention, le circuit magnétique est constitué par un assemblage de tôles magnétiques serrées entre deux plateaux de serrage, chacun desdits tubes étant dudgeonné sur l'un desdits flasques d'extrémité et sur le plateau de serrage qui lui fait face.

L'invention a également pour objet un procédé de fabrication d'un moteur électrique, caractérisé en ce que l'on effectue les opérations suivantes:
- on réalise un empilage de tôles statoriques préalablement découpées et percées et on les met en serrage entre deux plateaux,
- on enfile des barres coupées à la longueur voulue,
- on monte des flasques d'extrémité ainsi que des plaques de capotage,
- on soude les barres et les plaques aux flasques d'extrémité,
- on usine les alésages desdits flasques d'extrémité,
- on met en place les bobinages statoriques,
- on fixe par dudgeonnage des tubes dans les flasques et plateaux,
- on imprègne l'ensemble,
- on engage le rotor à l'intérieur du stator avec son ventilateur extérieur et ses paliers,
- on fixe un ventilateur pour le circuit de ventilation statorique, avec son capot,
- on fixe une boîte à bornes.

D'autres particularités et avantages de la présente invention apparaîtront à la description donnée ci-après d'un mode préféré de réalisation de l'invention, en référence au dessin annexé dans lequel:
- la figure 1 est une vue en élévation en demi-coupe axiale d'un moteur selon l'invention,
- la figure 2 est une vue en bout du même moteur, le ventilateur de stator et son capot étant ôtés,
- la figure 3 est vue en coupe d'une partie III de la figure 1,

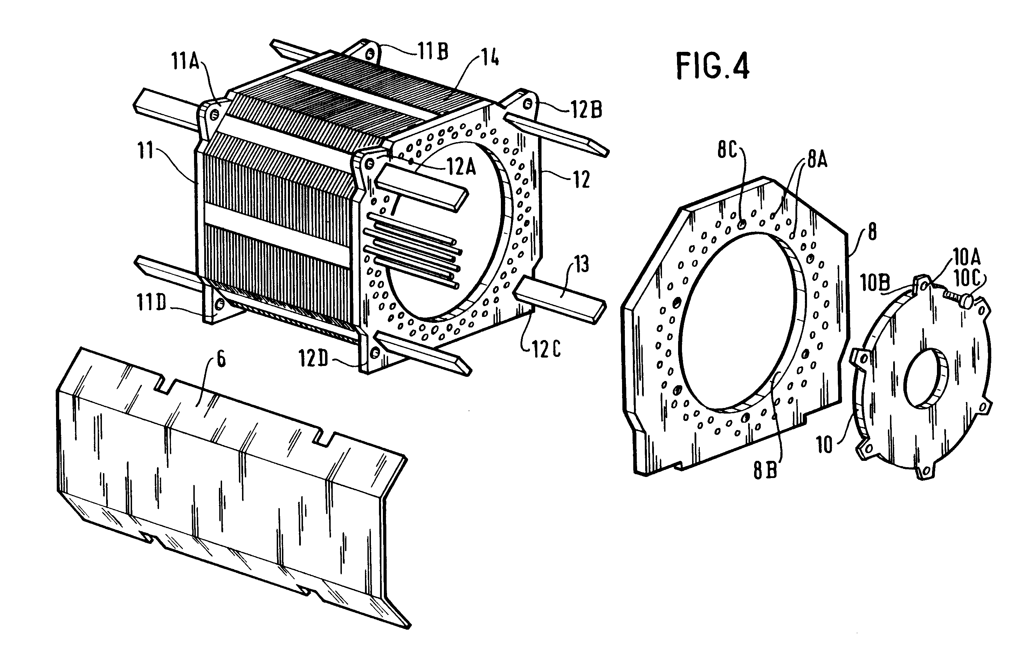

- la figure 4 est une vue éclatée des parties fixes du moteur, pour l'explication de son montage.

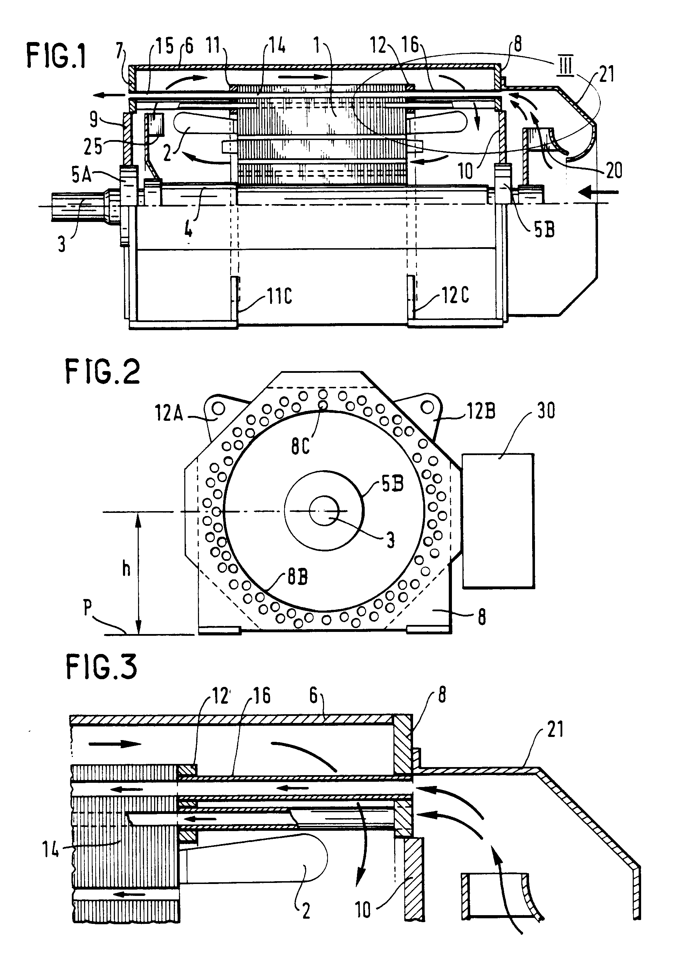

Dans la figure 1, la référence 1 désigne un circuit magnétique statorique constitué d'un empilage de tôles; la référence 2 désigne un bobinage statorique réalisé de la manière connue dans la technique des moteurs asynchrones. Le moteur comprend un arbre 3 portant un rotor 4 tournant dans des paliers 5A et 5 B; le moteur est capoté par des tôles 6, soudées sur des flasques d'extrémité 7 et 8 . Aux flasques d'extrémité 7 et 8 sont fixés respectivement des flasques de palier 9 et 10 portant les paliers 5A et 5B.

Les tôles statoriques sont serrées entre deux plateaux de serrage 11 et 12 ; elles sont positionnées par des barres telles que 13 qui s'insèrent dans des encoches des tôles et traversent les plateaux de serrage.

Les tôles sont percées de trous qui, lorsque les tôles sont positionnées, définissent des canaux de ventilation statorique 14. Ces canaux sont reliés aux flasques d'extrémité 7 et 8 par des tubes métalliques tels que 15 et 16 dudgeonnés à leurs extrémités dans les plateaux de serrage et les flasques d'extrémité. Les plateaux de serrage comportent à cet effet une série de perçages correspondant aux trous des tôles; de même, les flasques d'extrémité comportent une série de perçages tels que 8A. Les tubes sont réalisés en un métal bon conducteur de la chaleur, par exemple le cuivre ou l'aluminium. Le circuit de ventilation statorique est complété par un ventilateur 20 fixé sur l'arbre 3 à l'extérieur de l'un des flasques d'extrémité, ici le flasque 10; le ventilateur est protégé par un capot 21.

La ventilation du reste du moteur (bobinages statorique, rotor) est réalisé par un second circuit de ventilation intérieur au moteur; l'air est brassé par un ventilateur 25 calé sur l'arbre 3 et circule en circuit fermé à l'intérieur du moteur; un espace suffisant entre le capotage 6 et le stator 14 permet à l'air de circuler sans grandes pertes de charge.

La conception du moteur est telle qu'elle permet de réaliser avec des coûts de montage réduits des moteurs de puissances différentes.

Le montage est effectué comme décrit ci-après:
- on réalise un empilage de tôles statoriques préalablement découpées et percées et on les met en serrage entre les deux plateaux 11 et 12 par des tirants non représentés passant dans des trous des oreilles 11A,11B,..,11D,12A,12B, 12C, 12D des plateaux de serrage 11 et 12. On enfile les barres 13 coupées à la longueur voulue et on les soude sur les plateaux 11 et 12. On notera qu'il n'est pas nécessaire de réaliser un parallélisme rigoureux des plateaux de serrage, l'usinage précis étant reporté sur les alésages des flasques d'extrémité. Après l'opération de soudage, on peut retirer les tirants.
- on monte les flasques d'extrémité 7 et 8 ainsi que les plaques 6 de capotage contre les barres 13,
- on soude l'ensemble aux barres 13 ainsi que les plaques 6 aux flasques d'extrémité,
- on usine alors les alésages, tel que 8B, des flasques d'extrémité, pour permettre un positionnement ultérieur précis des flasques de palier,
- on met en place les bobinages statoriques,
- on réalise les connexions électriques en sortie de boîtes à bornes,
- on introduit les tubes 15 et 16 dans les flasques respectifs 7 et 11 ainsi que 12 et 8, ces tubes étant maintenus par dudgeonnage,
- on imprègne l'ensemble,
- on engage le rotor à l'intérieur du stator avec son ventilateur intérieur 25 et ses paliers,
- on engage les flasques d'extrémité 7 et 8 et on les fixe par des boulons 10C s'engageant dans des trous tels que 10A pratiqués dans des oreilles telles que 10B des flasques de palier et dans des trous tels que 8C des flasques d'extrémité,
- on fixe le ventilateur 20 pour le circuit de ventilation statorique, avec son capot 21,
- on fixe une boîte à bornes 30.

Le montage des moteurs selon l'invention est simple et ne nécessite que peu d'opérations d'usinage. Il est facile d'ajuster la puissance du moteur en réalisant, pour une hauteur d'axe donnée (h), des longueurs de fer différentes. La hauteur d'axe est définie comme la distance entre le plan d'appui P du moteur et l'axe de la ligne d'arbre (voir figure 2). A titre d'exemple, avec une hauteur d'axe donnée, on pourra réaliser quatre moteurs dont les puissance varient de 12% de l'un à l'autre.

L'encombrement du moteur de l'invention est inférieur d'au moins 30% à celui des moteurs de l'art antérieur.

L'invention s'applique notamment aux moteurs asynchrones.

## Revendications

1. Moteur électrique de type fermé comprenant notamment un circuit magnétique statorique et un capotage comprenant une enveloppe et deux flasques d'extrémité, comprenant un premier circuit de ventilation (20, 14, 15, 16) dudit circuit magnétique statorique et un second circuit de ventilation (25) intérieur audit capotage, les deux circuits de ventilation étant dissociés, le premier circuit de ventilation comportant des canaux pratiqués dans le circuit magnétique statorique parallèlement à l'axe du moteur et débouchant à l'extérieur du circuit statorique, caractérisé en ce que lesdits canaux (14) sont prolongés de part et d'autre du circuit magnétique statorique par des tubes (15, 16) traversés par de l'air extérieur au moteur envoyé par un premier ventilateur 20, le second circuit de ventilation comprenant un second ventilateur (25), disposé à l'intérieur du capotage du moteur, et envoyant de l'air entre les tubes et à l'extérieur de ceux-ci.

2. Moteur selon la revendication 1, caractérisé en ce que le circuit magnétique est constitué par un assemblage de tôles magnétiques serrées entre deux plateaux de serrage (11, 12), chacun desdits tubes (15, 16) étant dudgeonné sur l'un desdits flasques d'extrémité (7, 8) et sur le plateau de serrage (11, 12) qui lui fait face.

3. Procédé de fabrication d'un moteur électrique, caractérisé en ce que l'on effectue les opérations suivantes:
- on réalise un empilage de tôles statoriques préalablement découpées et percées et on les met en serrage entre deux plateaux (11, 12),
- on enfile des barres (13) coupées à la longueur voulue,
- on monte des flasques d'extrémité (7,8) ainsi que des plaques de capotage (6),
- on soude les barres (13) et les plaques (6) aux flasques d'extrémité (7,8),
- on usine les alésages (8B) desdits flasques d'extrémité (7,8),
- on met en place les bobinages statoriques (2),
- on fixe par dudgeonnage des tubes (15,16) dans les flasques et plateaux (7,11;12,8),
- on imprègne l'ensemble,
- on engage le rotor à l'intérieur du stator avec son ventilateur intérieur (25) et ses paliers (5A, 5B),
- on fixe un ventilateur (20) pour le circuit de ventilation statorique, avec son capot (21),
- on fixe une boîte à bornes (30).

## Claims

1. An electric motor of the enclosed type, comprising in particular a stator magnetic circuit and a casing comprising a sleeve and two end plates, the motor comprising a first ventilation circuit (20, 14, 15, 16) for said stator magnetic circuit and a second ventilation circuit (25) inside said casing, the two ventilation circuits being separate, the first ventilation circuit comprising channels formed in the stator magnetic circuit parallel to the axis of the motor and opening on to the outside of the stator circuit, the motor being characterized in that said channels (14) extend on either side of the stator magnetic circuit in the form of tubes (15, 16) which carry air drawn in by a first fan (20) from outside the motor, the second ventilation circuit comprising a second fan (25) situated inside the motor casing and blowing air between the tubes and outside the tubes.

2. A motor according to claim 1, characterized in that the magnetic circuit is constituted by an assembly of magnetic laminations pressed between two clamping plates (11, 12), each of said tubes (15, 16) being expanded into one of said end plates (7, 8) and into the clamping plate (11, 12) which faces it.

3. A method of manufacturing an electric motor, characterized in that the following operations are performed:
· previously-cut and perforated stator laminations are formed into a stack and pressed between two plates (11, 12);
· rods (13) cut to the required length are threaded through;
· the end plates (7, 8) and the casing plates (6) are mounted;
· the rods (13) and the casing plates (6) are welded to the end plates (7, 8);
· bores (8B) are machined in said end plates (7, 8);
· the stator windings (2) are fitted;
· tubes (15, 16) are secured in the plates (7, 11; 12, 8) by expansion;
· the assembly is impregnated;
· the rotor with its internal fan (25) and bearings (5A, 5B) is engaged within the stator;
· a fan (20) for the stator cooling circuit is fitted, including its cowling (21), and
· a terminal block is fitted (30).

## Patentansprüche

1. Elektromotor der geschlossenen Art, der insbesondere einen Stator-Magnetkreis und eine Verkleidung aufweist, die eine Hülle und zwei Endflansche besitzt, mit einem ersten Ventilationskreis (20, 14, 15, 16) für den Stator-Magnetkreis und einem davon getrennten zweiten Ventilationskreis (25) innerhalb der Verkleidung, wobei der erste Ventilationskreis Kanäle aufweist, die im Stator-Magnetkreis parallel zur Achse des Motors verlaufen und außerhalb des Statorkreises münden, dadurch gekennzeichnet, daß die Kanäle (14) auf beiden Seiten des Stator-Magnetkreises durch Rohre (15, 16) verlängert sind, die von von außerhalb des Motors kommender Luft durchquert werden, die von einem ersten Ventilator (20) gefördert wird, während der zweite Ventilationskreis einen zweiten Ventilator (25) aufweist, der sich im Inneren der Motorverkleidung befindet und Luft zwischen den Rohren hindurch und außerhalb dieser Rohre fördert.

2. Motor nach Anspruch 1, dadurch gekennzeichnet, daß der Magnetkreis aus einem Stapel von Magnetblechen besteht, die zwischen zwei Klemmplatten (11, 12) eingespannt sind, wobei jedes der Rohre (15, 16) auf einen der Endflansche (7, 8) und auf die ihm gegenüberliegende Klemmplatte (11, 12) eingewalzt ist.

3. Verfahren zur Herstellung eines Elektromotors, dadurch gekennzeichnet, daß man die folgenden Schritte durchführt:
- man stellt einen Stapel von Statorblechen her, die vorher ausgeschnitten und mit Löchern versehen wurden, und man spannt sie zwischen zwei Platten (11, 12) ein;
- man führt auf die gewünschte Länge geschnittene Stangen (13) ein;
- man bringt Endflansche (7, 8) sowie Verkleidungsplatten (6) an;
- man schweißt die Stangen (13) und die Platten (6) an die Endflansche (7, 8) an;
- man bearbeitet die Bohrungen (8B) der Endflansche (7, 8);
- man setzt die Statorwicklungen (2) ein;
- man befestigt Rohre (15, 16) durch Einwalzen in den Flanschen und Platten (7, 11; 12, 8);
- man imprägniert das Ganze;
- man führt den Rotor ins Innere des Stators mit seinem Innenventilator (25) und seinen Lagern (5A, 5B) ein;
- man befestigt einen Ventilator (20) für den Stator-Ventilationskreis mit seiner Haube (21);
- man befestigt einen Klemmenkasten (30).
